# EUROPÄISCHE PATENTSCHRIFT

(11) **EP 3 516 938 B1**
(45) Veröffentlichungstag und Bekanntmachung des Hinweises auf die Patenterteilung: **23.03.2022**
(21) Anmeldenummer: 18153860.4
(22) Anmeldetag: 29.01.2018
(51) Int. Cl.: A01B 15/02, A01B 35/26

(54) **BODENBEARBEITUNGSWERKZEUG**
SOIL WORKING TOOL
OUTIL DE TRAITEMENT DE SOL

(43) Veröffentlichungstag der Anmeldung: 31.07.2019
(73) Patentinhaber: Boehlerit GmbH & Co. KG., 8605 Kapfenberg (AT)
(72) Erfinder: BÄRNTHALER, Walter, 8641 St. Marein im Mürztal (AT); BURBÖCK, Hannes, 8652 Kindberg/Aumühl (AT)
(74) Vertreter: Wirnsberger & Lerchbaum Patentanwälte OG

(56) Entgegenhaltungen:
- EP-A1- 2 962 538
- DE-A1-102013 102 420
- DE-B- 1 222 304
- DE-U1-202009 019 047
- US-A- 991 810
- US-A- 2 316 097

## Beschreibung

Die Erfindung betrifft ein Bodenbearbeitungswerkzeug, insbesondere Schare, umfassend einen Grundkörper, an dem optional Kassetten angeordnet sind, und zumindest erste Schneidelemente, welche am Grundkörper oder den Kassetten zum Einschneiden in einem Erdreich entlang einer Arbeitsrichtung befestigt sind.

Bodenbearbeitungswerkzeuge wie Gänsefußscharen oder andere Scharen sind seit geraumer Zeit in der Landwirtschaft unerlässliche Arbeitsmittel zur Aufbereitung von Böden bzw. Erdreich. Eine gute Bodenaufbereitung im Vorfeld einer Aussaat ist wichtig, um ein gutes Ernteergebnis zu erzielen. Aus ökologischer Sicht kommt heute aufgrund des schlechten Rufs von Spritzmitteln und Diskussion über deren Einsatz auch hinzu, dass eine gute Bodenaufbereitung auch effektiv zu einer Minimierung des erforderlichen Spritzmittels beitragen kann.

Gänsefußscharen werden insbesondere zur seichten Bodenbearbeitung eingesetzt. Dabei wird in der Regel Erdreich in einer Tiefe von etwa 2 cm bis 8 cm mit einer oder mehreren Scharen flächig durchschnitten, wobei insbesondere Unkraut abgetrennt werden soll. Dadurch wird die oberste Schicht des Erdreichs im Idealfall vollständig vom darunter liegenden Erdreich getrennt, sodass eine Aufbereitung der abgetrennten obersten Schicht in effektiver Weise möglich ist.

Beim Durchtrennen des Erdreichs werden Gänsefußscharen oder entsprechende Bodenbearbeitungswerkzeuge von einem Transportmittel wie einem Traktor gezogen. Die Stirnseiten der Scharen stehen dann in schneidendem Eingriff mit dem Erdreich. Das so bearbeitete Erdreich setzt den schneidend wirkenden Scharen einen großen Widerstand entgegen, weshalb die Scharen, die üblicherweise aus einem Stahl gebildet sind, einem erheblichen Verschleiß unterliegen.

Um eine Verschleißfestigkeit von Scharen oder anderen Bodenbearbeitungswerkzeugen zu erhöhen, ist es in jüngerer Zeit bekannt geworden, Scharen oder dergleichen Bodenbearbeitungswerkzeuge mit Hartmetallkörpern zu bestücken. Die Hartmetallkörper, die in der Regel plättchenförmig ausgebildet sind, können dabei an einem Grundkörper in nicht schneidenden Bereichen befestigt sein, um einem Verschleiß des Grundkörpers durch abgleitendes Erdreich oder andere abrasive Materialien zu verringern. Ein Beispiel hierzu findet sich in EP2995180A, EP2962538A oder DE102013102420A. Darüber hinaus ist es auch bekannt geworden, Hartmetallelemente an einer Position einer Schneidkante einzusetzen. Sowohl im Fall eines nicht schneidenden Einsatzes als auch eines schneidenden Einsatzes einer Bestückung mit Hartmetallelementen wird durch das Hartmetall ein im Vergleich mit einem Grundkörper, der wie erwähnt üblicherweise aus Stahl besteht, zunächst eine relativ teure ergänzende Bestückung eingeführt. Allerdings rechnen sich diese Kosten später in Bezug auf eine Gesamtlebenszeit des Bodenbearbeitungswerkzeuges, sodass der zunächst erhöhte Kostenaufwand in einer Berechnung über die Lebensdauer mehr als kompensiert wird.

Wenn Hartmetallelemente auf Bodenbearbeitungswerkzeugen für einen schneidenden Eingriff vorgesehen sind, werden diese auf einem Grundkörper angelötet. Hierfür wird eine Nut vorgesehen, in welche die Schneidplatten eingesetzt werden, wobei sich die Schneidplatten berühren. Dabei ist allerdings nachteilig, dass es sich um ein sehr aufwendiges Verfahren handelt, da die einzelnen Schneidplatten relativ zueinander genau positioniert werden müssen. Darüber hinaus können sich die einzelnen Schneidplatten aufgrund der vorgesehenen Berührung im Einsatz auch wechselseitig kräftemäßig belasten.

Hier setzt die Erfindung an. Aufgabe der Erfindung ist es, ein Bodenbearbeitungswerkzeug der eingangs genannten Art anzugeben, das auf einfache Weise herstellbar ist und im Einsatz gute Arbeitsergebnisse erbringt.

Diese Aufgabe wird gelöst, wenn bei einem Bodenbearbeitungswerkzeug der eingangs genannten Art die ersten Schneidelemente in separaten Sitzen nach Anspruch 1 angeordnet sind. Dabei ist von Vorteil, dass sich die zumindest ersten Schneidelemente beim Anlöten einfach positionieren lassen, wobei die Positionierung insbesondere unabhängig von anderen Schneidelementen ist. Darüber hinaus können sich die ersten Schneidelemente im Einsatz nicht wechselseitig beeinflussen, beispielsweise bei besonders hoher Krafteinwirkung auf ein einzelnes Schneidelement.

Neben den ersten Schneidelementen, die üblicherweise als Schneidplatten ausgebildet sind, können auch zweite Schneidelemente sowie gegebenenfalls weitere Schneidelemente vorgesehen sein. Sind weitere Schneidelemente vorgesehen, ist jedoch bevorzugt, dass eine Schnittleistung ganz oder zumindest überwiegend von den ersten Schneidelementen übernommen wird, die hierfür in den entsprechenden Sitzen angeordnet sind.

Besonders bevorzugt ist es, dass die Sitze einen Anschlag zur Positionierung der ersten Schneidelemente aufweisen. Die entsprechenden Schneidelemente können dann in den einzelnen Sitzen sehr einfach beim Anlöten positioniert werden. Ein anderer Vorteil ergibt sich daraus, dass bei Ausbildung der ersten Schneidelemente als Schneidplatten der Anschlag weiter als bisher im Stand der Technik um eine Schneidplatte herum geführt werden kann, nämlich nicht nur über eine Längsseite, sondern auch teilweise eine Breitseite der ersten Schneidelemente bzw. Schneidplatten. Dadurch ist im Schnitteinsatz auch eine gute Kraftverteilung auf den Grundkörper gegeben, was wiederum zur Langlebigkeit des Bodenbearbeitungswerkzeuges insgesamt positiv beiträgt.

Wenn die ersten Schneidelemente voneinander beabstandet angeordnet sind, ist eine wechselseitige Beeinflussung während eines Schnitteinsatzes ausgeschlossen, was die erläuterten Vorteile mit sich bringt.

Grundsätzlich können die ersten Schneidelemente aus einem beliebigen Material bestehen, das in Bezug auf Festigkeit, Zähigkeit und abrasives Verhalten ausreichende mechanische Kennwerte erbringen. Hierfür können beispielsweise verschiedene Kompositmaterialien oder Keramiken eingesetzt werden. Besonders bevorzugt ist es jedoch, dass zumindest einzelne, vorzugsweise alle, der ersten Schneidelemente aus oder mit Hartmetall gebildet sind. Mit Vorteil handelt es sich bei den ersten Schneidelementen um Schneidplatten, die aus einem Hartmetall erstellt sind. Bei dem Hartmetall kann es sich um ein Hartmetall handeln, das neben einem üblichen Bindemetall aus Cobalt, Eisen und/oder Nickel im Ausmaß von 6 Gewichtsprozent (Gew.-%) bis 12 Gew.-% Wolframcarbid aufweist. Das Wolframcarbid kann gegebenenfalls teilweise durch bis zu 25 Gew.-% Titancarbid ersetzt sein. Durchschnittliche Korngrößen des Wolframcarbids sowie des optional vorgesehenen Titancarbids liegen dabei im Bereich von 0,8 µm bis 10 µm. Bevorzugt werden durchschnittliche Korngrößen von 1,5 µm bis 4,0 µm. Die ersten Schneidelemente allgemein und die Schneidplatten im Speziellen können beschichtet sein, wodurch sich eine Verschleißfestigkeit erhöht. Bevorzugte Beschichtungen sind Beschichtungen aus einem Aluminiumoxid oder einem Aluminiumtitannitrid. Möglich sind auch kombinierte Beschichtungen mit einer Vielzahl einzelner Beschichtungslagen. Die Beschichtungslagen können insbesondere mittels eines CVD-Verfahrens abgeschieden sein. Eine Dicke einer allfälligen Beschichtungslage beträgt in der Regel 2 µm bis 15 µm, insbesondere 3 µm bis 5 µm.

Der Grundkörper kann bei einem erfindungsgemäßen Bodenbearbeitungswerkzeug aus einem Stahl gebildet sein. Sind Kassetten vorgesehen, so sind diese am Grundkörper befestigt und tragen die ersten Schneidelemente. Kassetten sind insbesondere dann zweckmäßig, wenn der Grundkörper an sich nicht verschleißt, sondern lediglich die schneidaktiven Bereiche, die bei Erreichen einer bestimmten Verschleißmarke getauscht werden sollen. Auf den Kassetten sind dann die ersten Schneidelemente befestigt. Die einzelnen Kassetten können bedarfsweise getauscht werden. Sind Kassetten vorgesehen, so sind diese mit Vorteil ebenso wie der Grundkörper aus einem Stahl gebildet. Es kann der gleiche Stahl wie für den Grundkörper zum Einsatz kommen, was aber nicht zwingend ist.

Der Grundkörper kann grundsätzlich eine beliebige Form aufweisen. Für einen schneidenden, flächigen Einschnitt in einem Erdreich ist es von Vorteil, wenn der Grundkörper in Draufsicht im Wesentlichen v-förmig ausgebildet ist. Die einzelnen ersten Schneidelemente sind dann an der Stirnseite der v-Form außenseitig befestigt und bilden aneinander anschließende Schnittbereiche. Um eine Überbrückung an einer Spitze der v-Form zu schaffen, kann an der Spitze der v-Form zumindest ein zweites Schneidelement befestigt sein. Zweckmäßig ist es jedoch, dass die ersten Schneidelemente in Draufsicht auf den Grundkörper entlang einer Arbeitskante zumindest abschnittsweise zueinander rückspringend versetzt sind. Die v-Form ist dann im Einsatz symmetrisch zu einer Arbeitsrichtung, wobei die Schneidelemente bzw. Schneidplatten in Draufsicht an der Arbeitskante mit einer vorbestimmten Schrägstellung zur Arbeitskante angeordnet sind. Durch den Versatz der einzelnen Schneidelemente zueinander ergibt sich, dass die stirnseitigen Schneidkanten der einzelnen Schneidelemente in Arbeitsrichtung betrachtet in Bezug auf deren Schnittebene teilweise überlappen, also Bereiche der Schneidkanten in Arbeitsrichtung hintereinander angeordnet sind. Dies bringt zwei Vorteile mit sich: Zum einen ist dadurch sichergestellt, dass trotz Befestigung der ersten Schneidelemente in einzelnen, separaten Sitzen aufgrund der gedanklichen Überlappung der Schneidkanten der Spalt zwischen diesen überbrückt wird. Somit kann ein flächiges Durchtrennen des Erdreichs erreicht werden, obwohl die ersten Schneidelemente voneinander beabstandet sind. Zum anderen führt die Überlappung der Schneidkanten dazu, dass jener Bereich der Schneidkante eines rückversetzten ersten Schneidelementes dann schneidaktiv wird, wenn der entsprechende vorgeordnete Bereich der Schneidkante des benachbarten, vorversetzten ersten Schneidelementes nicht mehr schneidaktiv ist. Dadurch kann eine Standzeit des Bodenbearbeitungswerkzeuges erhöht werden. Darüber hinaus kann Unkraut, das es zu durchtrennen gilt, aufgrund des Rückversatzes der ersten Schneidelemente relativ zueinander nicht ohne Weiteres durch Entlanggleiten an einer durchgehenden Schneidlinie ausweichen, sondern wird wirksamer geschnitten.

Die einzelnen ersten Schneidelemente sind in Bezug auf eine Arbeitskante schräg angestellt. Das Ausmaß der Schrägstellung und des Rückversatzes hängt von der v-Form des Bodenbearbeitungswerkzeuges ab. Letztlich wird die Anordnung der ersten Schneidelemente in Bezug auf Schrägstellung und Rückversatz so gewählt, dass die vorstehenden Wirkungen des konsekutiven Eingriffs von Teilbereichen einzelner Schneidkanten benachbarter Schneidelemente erreicht werden.

Eine Anordnung der Schneidelemente, insbesondere bei Ausbildung derselben als Schneidplatten, erfolgt mit Vorteil so, dass aus der Arbeitsrichtung betrachtet einzelne Schneidkanten der ersten Schneidelemente auf gleicher Höhe angeordnet sind. Damit wird der gewünschte durchgehende, effektive und flächige Schnitt im Erdreich erreicht. Dabei sind die Schneidkanten wie bereits erläutert in Arbeitsrichtung teilweise hintereinander angeordnet. Die ersten Schneidelemente können in diesem Zusammenhang mit einem Winkel von 20° bis 50°, vorzugsweise 25° bis 35°, zu einer Grundfläche des Grundkörpers positioniert sein. Entsprechende Winkel sind zweckmäßig, um die gewünschte Schnittleistung durch einen günstigen Keilwinkel zu erreichen, gleichzeitig aber einen Verschleiß zu minimieren.

Die für die ersten Schneidelemente vorgesehenen Sitze können im Grundkörper auf beliebige Weise erstellt werden, beispielsweise durch Laserschneiden. Möglich ist es auch, bereits einen Grundkörper mit entsprechender Form auszubilden. Besonders günstig ist es jedoch, wenn der Grundkörper als Schmiedekörper aus Stahl gebildet ist und die Sitze durch spanabhebende Bearbeitung eingearbeitet werden, insbesondere durch Fräsen. Dies erlaubt eine rasche und effiziente Fertigung eines Bodenbearbeitungswerkzeuges, da nach dem Fräsen unmittelbar die Hartmetallbestückung bzw. Anbringung von Schneidelementen durch stoffschlüssige Verbindung wie Kleben oder Löten erfolgen kann.

Es ist möglich, dass am Grundkörper zusätzlich Ergänzungen vorgenommen werden, um diesen verschleißfester zu gestalten. Hierbei kann es sich insbesondere um ergänzende Plättchen handeln, die in geeigneten Vertiefungen am Grundkörper befestigt sind und einen höheren abrasiven Widerstand gegenüber dem abgleitenden Erdreich aufweisen als der Grundkörper als solcher. Es kommen hierfür insbesondere Plättchen aus Kompositmaterialien oder einer Keramik, aber auch Hartmetallplättchen infrage. Im Gegensatz zu den erläuterten Schneidelementen sind diese ergänzenden Plättchen jedoch ein Verschleißschutz für den Grundkörper und entfalten keine Schnittwirkung.

Weitere Merkmale, Vorteile und Wirkungen ergeben sich aus den nachfolgend dargestellten Ausführungsbeispielen. In den Zeichnungen, auf welche dabei Bezug genommen wird, zeigen:
Fig. 1 eine stirnseitige Ansicht eines ersten Bodenbearbeitungswerkzeuges;
Fig. 2 eine Draufsicht auf das Bodenbearbeitungswerkzeug gemäß Fig.1;
Fig. 3 das Bodenbearbeitungswerkzeug aus Fig. 1 in einer Seitenansicht;
Fig. 4 eine perspektivische Ansicht eines zweiten Bodenbearbeitungswerkzeuges;
Fig. 5 eine stirnseitige Ansicht des Bodenbearbeitungswerkzeuges gemäß Fig. 4;
Fig. 6 eine Draufsicht auf ein Bodenbearbeitungswerkzeug gemäß Fig. 4;
Fig. 7 eine Seitenansicht des Bodenbearbeitungswerkzeuges gemäß Fig. 4;
Fig. 8 eine Draufsicht auf ein Bodenbearbeitungswerkzeug gemäß Fig. 4 ohne Schneidplatten.

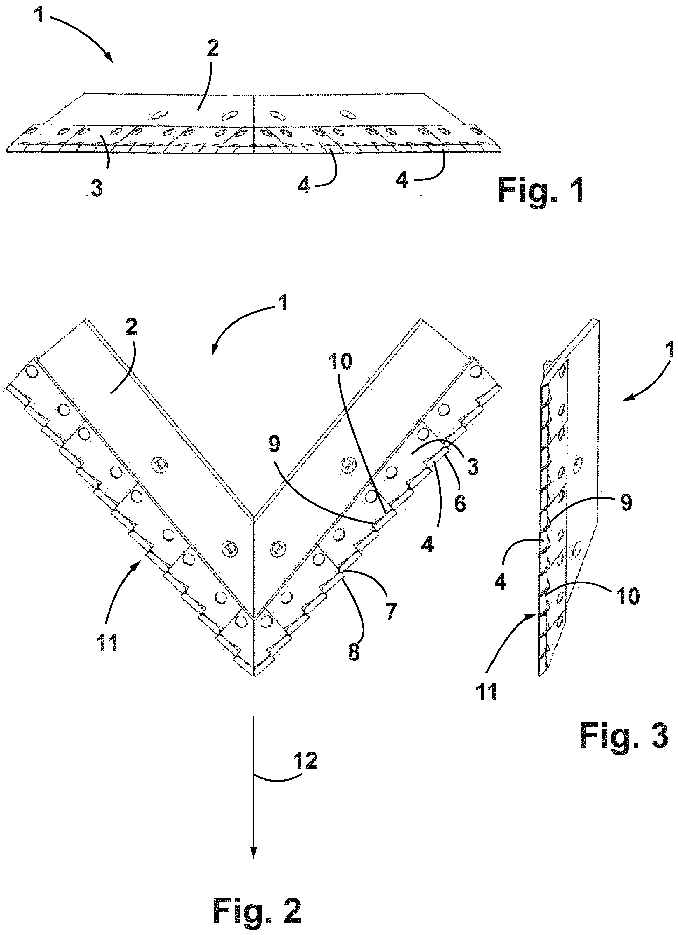

In Fig. 1 ist ein erstes Beispiel eines erfindungsgemäßen Bodenbearbeitungswerkzeuges 1 in einer stirnseitigen Ansicht dargestellt. In Fig. 2 ist dasselbe Bodenbearbeitungswerkzeug 1 in Draufsicht und in Fig. 3 in einer Seitenansicht dargestellt.

Das Bodenbearbeitungswerkzeug gemäß Fig. 1 bis Fig. 3 weist einen Grundkörper 2 auf. Der Grundkörper 2 ist aus zwei im Wesentlichen länglich ausgebildeten Seitenflügeln gebildet, die an einer Seite abgeschrägt und an dieser abgeschrägten Seite miteinander verbunden sind. Der Grundkörper 2 kann aus noch mehr Einzelteilen bestehen, kann aber auch einteilig ausgebildet sein. In der Regel besteht der Grundkörper 2 aus einem Stahl. Der Grundkörper 2 weist eine in Draufsicht v-förmige Form auf, wie dies insbesondere aus Fig. 2 ersichtlich ist. An einer Stirnseite des v-förmigen Grundkörpers 2 ist eine Vielzahl von Kassetten 3 angeordnet. Die Kassetten 3 sind mit dem Grundkörper 2 lösbar verbunden, beispielsweise durch Schrauben. Die Kassetten 3 decken eine stirnseitige Seite des Grundkörpers 2 bzw. eine Arbeitskante 11 zur Gänze ab. Die Kassetten 3 können wie der Grundkörper 2 aus einem Stahl gefertigt sein. Insbesondere können die Kassetten 3 aus demselben Stahl wie der Grundkörper 2 gebildet sein, was jedoch nicht zwingend ist. An einer Stirnseite jeder Kassette 3 sind wiederum erste Schneidelemente 4 angebracht, die als Schneidplatten ausgebildet sind. Die Schneidplatten befinden sich an einer Stirnseite der Kassetten 3. Jede Kassette 3 mit Ausnahme der stirnseitig ersten nimmt drei Schneidplatten auf, wenngleich auch eine andere Anzahl von Schneidplatten an den Kassetten 3 vorgesehen sein kann. Die Schneidplatten bestehen aus einem höher verschleißfesten Material als jenes der Kassetten 3 bzw. des Grundkörpers 2. Die Schneidplatten können hier und im Folgenden beispielsweise aus einem höherfesten Stahl, einer Keramik, wie Siliciumcarbid, einem Kompositmaterial wie einem partikelverstärkten Metall oder besonders bevorzugt aus einem Hartmetall bestehen. Für die einzelnen Schneidplatten ist jeweils ein Sitz 9 vorgesehen. Die Sitze weisen dabei jeweils einen Anschlag 10 auf, sodass die Schneidplatten bei der Befestigung in den Kassetten 3 besonders einfach positioniert werden können. Darüber hinaus dienen die Anschläge 10 auch einer effizienten Kraftableitung von den Schneidplatten in die Kassetten 3 bei einem Einsatz des Bodenbearbeitungswerkzeuges 1.

Wie insbesondere aus Fig. 3 ersichtlich ist, sind die einzelnen Schneidplatten voneinander aufgrund der Anschläge 10 beabstandet bzw. getrennt. Um dennoch eine durchgängige Schnittlinie entlang einer Arbeitskante 11 zu erreichen, sind die einzelnen Schneidplatten beginnend von der Spitze des v-förmigen Bodenbearbeitungswerkzeuges 1 relativ zueinander rückversetzt, sodass jede Schneidplatte jeweils mit einer vorderen Ecke 7 einer Schneidkante im Bereich einer hinteren Ecke 8 der vorherigen Schneidplatte zu liegen kommt. Durch die v-förmige Ausbildung des Bodenbearbeitungswerkzeuges 1

kommt es bei dieser Anordnung dazu, dass sich in Arbeitsrichtung 12 eine durchgehende Schnittlinie ergibt, weil einzelne Schneidkanten 6 zum einen auf einer gleichen Höhe liegen und zum anderen eine rückversetzte Schneidkante 6 einer nachfolgenden Schneidplatte in Arbeitsrichtung 12 mit der Schnittlinie der Schneidkante 6 der vorherigen Schneidplatte überlappt. Dadurch ist trotz Beabstandung der Schneidplatten sichergestellt, dass eine entlang der Arbeitskante 11 zusammengesetzte durchgängige Gesamtschnittlinie erreicht wird, was für einen flächigen, ununterbrochenen Schnitt im Erdreich gewünscht und erforderlich ist.

Die einzelnen Schneidplatten sind bei Ausbildung aus einem Hartmetall an den Kassetten 3 durch Löten oder Kleben verbunden. Sofern Schneidkanten 6 bzw. Schneidplatten an einer Kassette 3 so weit verschließen sind, dass diese nicht mehr einsatztauglich sind, kann eine einzelne Kassette gelöst werden. Dabei ergibt sich der Vorteil, dass lediglich ein bereichsweiser Wechsel in jenem Bereich erforderlich ist, welcher gerade verschlissen ist. Ein Einsatz von Kassetten 3 und Schneidplatten ist damit minimiert.

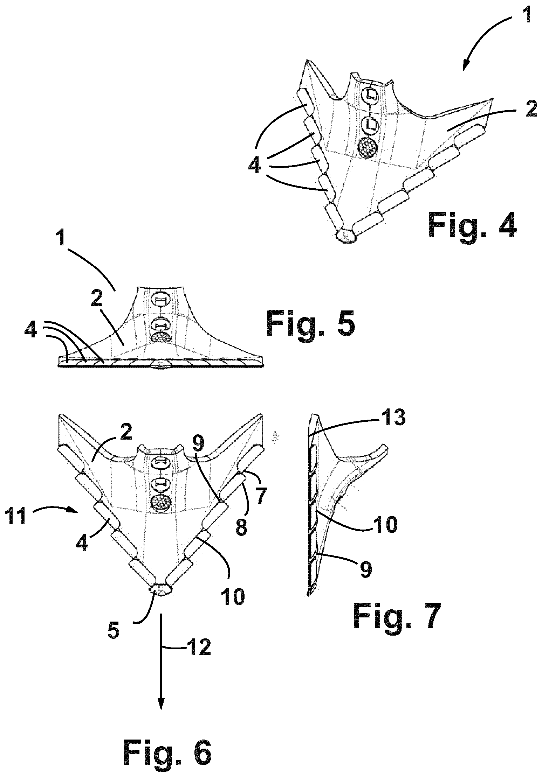

In Fig. 4 bis Fig. 8 ist ein zweites Beispiel eines erfindungsgemäßen Bodenbearbeitungswerkzeuges 1 dargestellt. Bei diesem Bodenbearbeitungswerkzeug 1 ist der Grundkörper 2 grundsätzlich einteilig gefertigt und kann beispielsweise durch Schmieden aus einem Stahl erstellt sein. Der Grundkörper 2 weist zumindest eine Öffnung auf, sodass der Grundkörper 2 an einem Zugfahrzeug wie einem Traktor endseitig befestigt werden kann und das Bodenbearbeitungswerkzeug 1 in Arbeitsrichtung 12 ziehbar ist. Dies entspricht jener Arbeitsweise, die auch bei einem Bodenbearbeitungswerkzeug 1 gemäß Fig. 1 bis Fig. 3 Anwendung findet.

Im Unterschied zum ersten Beispiel gemäß Fig. 1 bis Fig. 3 sind keine Kassetten 3 vorgesehen. Die ersten Schneidelemente 4 sind wiederum als Schneidplatten ausgebildet, die wie im ersten Beispiel in Draufsicht im Wesentlichen rechteckig ausgebildet sind. Die Schneidplatten können wiederum mit Vorteil aus einem Hartmetall gefertigt sein und sind in diesem Fall unmittelbar auf dem Grundkörper 2 durch stoffschlüssige Verbindung wie Löten oder Kleben angebracht. Die Schneidplatten sind wieder relativ zueinander entlang Arbeitskante 11, die gemäß Fig. 6 von einer Spitze des wiederum v-förmigen Grundkörpers 2 ausgehend nach hinten verläuft, jeweils zueinander rückversetzt, sodass sich bei den am Grundkörper 2 vorgesehenen Sitzen 9 auch bei der in diesem Beispiel gegebenen Beabstandung der einzelnen Schneidplatten eine durchgängige Schnittlinie ergibt. Eine Beabstandung der einzelnen ersten Schneidelemente 4 bzw. Schneidplatten in den einzelnen Sitzen 9 mit Anschlägen 10 ist insbesondere in der Seitenansicht gemäß Fig. 7 ersichtlich. Die ersten Schneidelemente 4 bzw. Schneidplatten sind geneigt befestigt und schließen etwa einen Winkel von 30° mit einer gedachte Grundfläche 13 des Grundkörpers 2 ein.

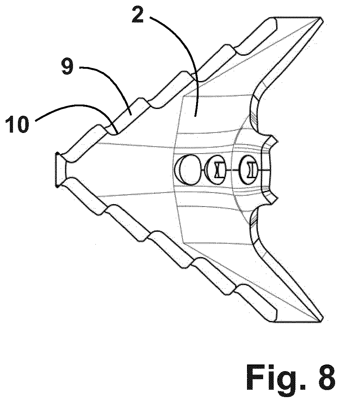

In Fig. 8 ist der Grundkörper 2 ohne Schneidplatten dargestellt, sodass die einzelnen Sitze 9 samt Anschlägen 10 im Detail ersichtlich sind. Durch die individuellen, separaten Sitze 9 für jede einzelne Schneidplatte wird eine einfache Positionierung bei der Herstellung des Bodenbearbeitungswerkzeuges 1 erreicht. Jede einzelne Schneidplatte kann gesondert an einem Anschlag 10 in einen Sitz 9 leicht ausgerichtet und dort insbesondere durch Löten fixiert werden. Da die einzelnen Schneidplatten entlang der Arbeitskante 11 wiederum relativ zueinander rückversetzt sind, ergibt sich trotz der mit den Sitzen 9 gestalteten Beabstandung einzelner Schneidplatten eine durchgängige Schnittlinie. Des Weiteren ist der Vorteil gegeben, dass die stärker verschleißenden vorspringenden Bereiche bzw. vorderen Ecken 7 in Bezug auf eine Schnittlinie mit hinteren Ecken 8 der Schneidkanten 6 der jeweils danach angeordneten Schneidplatten überlappen, sodass bei einem Verschleiß dieser vorspringenden Ecke die Schneidkante 6 der nachgeordneten Schneidplatte schnittaktiv wird. Ein erfindungsgemäßes Bodenbearbeitungswerkzeug weist somit neben der einfachen Herstellung auch eine optimierte Auslegung der einzelnen ersten Schneidelemente in Bezug auf eine maximale Einsatzdauer auf.

Wie in Fig. 6 ersichtlich ist, kann auch zumindest ein zweites Schneidelement 5 an dem Grundkörper 2 vorgesehen sein. Das zumindest zweite Schneidelement 5 kann beispielsweise besonders ausgelegt sein, um wie ersichtlich die Spitze der v-Form des Grundkörpers 2 abzudecken und im Übrigen die auch an der Spitze erforderliche Schnittleistung zu erbringen.

## Patentansprüche

1. Bodenbearbeitungswerkzeug (1), insbesondere Schare, umfassend einen Grundkörper (2), an dem optional Kassetten (3) angeordnet sind, und zumindest erste Schneidelemente (4), welche am Grundkörper (2) oder den Kassetten (3) zum Einschneiden in einem Erdreich entlang einer Arbeitsrichtung (12) befestigt sind, **dadurch gekennzeichnet, dass** die ersten Schneidelemente (4) in separaten Sitzen (9) angeordnet sind, wobei die ersten Schneidelemente (4) voneinander beabstandet angeordnet sind und wobei ersten Schneidelemente (4) in Bezug auf eine Arbeitskante (11) schräg angestellt sind, sodass Schneidkanten der Schneidelemente (4) in Arbeitsrichtung (12) teilweise hintereinander angeordnet sind.

2. Bodenbearbeitungswerkzeug (1) nach Anspruch 1, **dadurch gekennzeichnet, dass** die Sitze (9) einen Anschlag (10) zur Positionierung der ersten Schneidelemente (4) aufweisen.

3. Bodenbearbeitungswerkzeug (1) nach Anspruch 1 oder 2, **dadurch gekennzeichnet, dass** die ersten Schneidelemente (4) voneinander beabstandet angeordnet sind.

4. Bodenbearbeitungswerkzeug (1) nach einem der Ansprüche 1 bis 3, **dadurch gekennzeichnet, dass** zumindest einzelne, vorzugsweise alle, der ersten Schneidelemente (4) aus oder mit Hartmetall gebildet sind.

5. Bodenbearbeitungswerkzeug (1) nach einem der Ansprüche 1 bis 4, **dadurch gekennzeichnet, dass** der Grundkörper (2) aus einem Stahl gebildet ist.

6. Bodenbearbeitungswerkzeug (1) nach einem der Ansprüche 1 bis 5, **dadurch gekennzeichnet, dass** Kassetten (3) vorgesehen sind, wobei die Kassetten (3) aus einem Stahl gebildet sind.

7. Bodenbearbeitungswerkzeug (1) nach einem der Ansprüche 1 bis 6, **dadurch gekennzeichnet, dass** der Grundkörper (2) in Draufsicht im Wesentlichen v-förmig ausgebildet ist.

8. Bodenbearbeitungswerkzeug (1) nach Anspruch 7, **dadurch gekennzeichnet, dass** die ersten Schneidelemente (4) in Draufsicht auf den Grundkörper (2) entlang einer Arbeitskante (11) zumindest abschnittsweise zueinander rückspringend versetzt angeordnet sind.

9. Bodenbearbeitungswerkzeug (1) nach einem der Ansprüche 1 bis 8, **dadurch gekennzeichnet, dass** aus der Arbeitsrichtung (12) betrachtet einzelne Schneidkanten (6) der ersten Schneidelemente (4) auf gleicher Höhe angeordnet sind.

10. Bodenbearbeitungswerkzeug (1) nach Anspruch 9, **dadurch gekennzeichnet, dass** Bereiche der Schneidkanten (6) in Arbeitsrichtung (12) hintereinander angeordnet sind.

11. Bodenbearbeitungswerkzeug (1) nach einem der Ansprüche 1 bis 10, **dadurch gekennzeichnet, dass** die ersten Schneidelemente (4) mit einem Winkel von 20° bis 50°, vorzugsweise 25° bis 35°, zu einer Grundfläche (13) des Grundkörpers (2) positioniert sind.

12. Bodenbearbeitungswerkzeug (1) nach einem der Ansprüche 1 bis 11, **dadurch gekennzeichnet, dass** die Sitze (9) durch Fräsen erstellt sind.

## Claims

1. Soil preparation tool (1), in particular a share, comprising a main body (2), on which optional cassettes (3) are arranged, and at least first cutting elements (4), which are attached to the main body (2) or to the cassettes (3) for cutting into a soil along a working direction (12), **characterized in that** the first cutting elements (4) are arranged in separate mounts (9), wherein the first cutting elements (4) are arranged spaced apart from each other and wherein first cutting elements (4) are angled in relation to a working edge (11), such that cutting edges of the cutting elements (4) are partially arranged one behind the other in the working direction (12).

2. Soil preparation tool (1) according to claim 1, **characterized in that** the mounts (9) have a stop (10) for positioning the first cutting elements (4).

3. Soil preparation tool (1) according to claim 1 or 2, **characterized in that** the first cutting elements (4) are arranged spaced apart from each other.

4. Soil preparation tool (1) according to any one of claims 1 to 3, **characterized in that** at least individual, preferably all, of the first cutting elements (4) are formed from or with carbide.

5. Soil preparation tool (1) according to any one of claims 1 to 4, **characterized in that** the main body (2) is formed from a steel.

6. Soil preparation tool (1) according to any one of claims 1 to 5, **characterized in that** cassettes (3) are provided, wherein the cassettes (3) are formed from a steel.

7. Soil preparation tool (1) according to any one of claims 1 to 6, **characterized in that** the main body (2) is designed essentially V-shaped when viewed from the top.

8. Soil preparation tool (1) according to claim 7, **characterized in that** the first cutting elements (4) are arranged offset from each other in a recessed manner along a working edge (11), at least in portions, in a top view of the main body (2).

9. Soil preparation tool (1) according to any one of claims 1 to 8, **characterized in that** individual cutting edges (6) of the first cutting elements (4) are arranged at the same height when viewed in the working direction (12) .

10. Soil preparation tool (1) according to claim 9, **characterized in that** regions of the cutting edges (6) are arranged one after the other when viewed in the working direction (12).

11. Soil preparation tool (1) according to any one of claims 1 to 10, **characterized in that** the first cutting elements (4) are positioned at an angle of 20° to 50°, preferably 25° to 35°, to a base area (13) of the main body (2).

12. Soil preparation tool (1) according to any one of claims 1 to 11, **characterized in that** the mounts (9) are created by milling.

## Revendications

1. Outil de travail du sol (1), notamment des socs, comprenant un corps de base (2), sur lequel des cassettes (3) sont optionnellement disposées, et au moins des premiers éléments de coupe (4), qui sont fixés sur le corps de base (2) ou les cassettes (3) pour réaliser des entailles dans un sol le long d'une direction de travail (12), **caractérisé en ce que** les premiers éléments de coupe (4) sont disposés dans des sièges séparés (9), dans lequel les premiers éléments de coupe (4) sont disposés à distance les uns des autres et dans lequel les premiers éléments de coupe (4) sont inclinés par rapport à une arête de travail (11) de sorte que les arêtes de coupe des éléments de coupe (4) soient partiellement disposées l'une derrière l'autre dans la direction de travail (12).

2. Outil de travail du sol (1) selon la revendication 1, **caractérisé en ce que** les sièges (9) présentent une butée (10) de positionnement des premiers éléments de coupe (4).

3. Outil de travail du sol (1) selon la revendication 1 ou 2, **caractérisé en ce que** les premiers éléments de coupe (4) sont disposés à distance les uns des autres.

4. Outil de travail du sol (1) selon une des revendications 1 à 3, **caractérisé en ce qu'**au moins certains, de préférence tous, des premiers éléments de coupe (4) sont formés de ou avec du métal dur.

5. Outil de travail du sol (1) selon une des revendications 1 à 4, **caractérisé en ce que** le corps de base (2) est formé d'un acier.

6. Outil de travail du sol (1) selon une quelconque des revendications 1 à 5, **caractérisé en ce que** des cassettes (3) sont prévues, dans lequel les cassettes (3) sont formées d'un acier.

7. Outil de travail du sol (1) selon une des revendications 1 à 6, **caractérisé en ce que** le corps de base (2) est configuré essentiellement en forme de V en vue de dessus.

8. Outil de travail du sol (1) selon la revendication 7, **caractérisé en ce que** les premiers éléments de coupe (4) en vue de dessus sur le corps de base (2) le long d'une arête de travail (11) sont disposés au moins partiellement décalés l'un de l'autre et en retrait.

9. Outil de travail du sol (1) selon une des revendications 1 à 8, **caractérisé en ce que**, vues de la direction de travail (12), des arêtes de coupe individuelles (6) des premiers éléments de coupe (4) sont disposées à la même hauteur.

10. Outil de travail du sol (1) selon la revendication 9, **caractérisé en ce que** des zones des arêtes de coupe (6) sont disposées les unes derrière les autres dans la direction de travail (12).

11. Outil de travail du sol (1) selon une des revendications 1 à 10, **caractérisé en ce que** les premiers éléments de coupe (4) sont positionnés à un angle de 20° à 50°, de préférence 25° à 35°, par rapport à une surface de base (13) des corps de base (2) .

12. Outil de travail du sol (1) selon une des revendications 1 à 1 1, **caractérisé en ce que** les sièges (9) sont créés par fraisage.
